# FASCICULE DE BREVET EUROPEEN

(11) **EP 0 891 734 B1**
(45) Date de publication et mention de la délivrance du brevet: **04.10.2000**
(21) Numéro de dépôt: 97202208.1
(22) Date de dépôt: 14.07.1997
(51) Int. Cl.: A47J 31/06, A47J 31/40

(54) **Dispositif pour la confection de boisson**
Vorrichtung zur Herstellung eines Getränkes
Apparatus for making a beverage

(43) Date de publication de la demande: 20.01.1999
(73) Titulaire: SOCIETE DES PRODUITS NESTLE S.A., 1800 Vevey (CH)
(72) Inventeur: Masek, Petr, 1614 Granges (CH); Kollep, Alexandre, 1009 Pully (CH)
(74) Mandataire: Thomas, Alain

(56) Documents cités:
- EP-A- 0 242 556
- EP-A- 0 512 470
- EP-A- 0 521 188

## Description

L'invention concerne un dispositif pour la confection de boisson par extraction d'une capsule comprenant une coupelle et une bordure et disposée dans un ensemble porte-capsule pour machine à café.

On connait déjà un dispositif permettant d'extraire une capsule dans un dispositif sous pression. Le brevet EP 242'556 au nom de la demanderesse concerne un dispositif pour la confection de boisson par extraction d'une capsule disposée dans un porte-capsule pour machine à café et comprenant une cage à capsule coopérant avec un porte-capsule. L'inconvénient de ce dispositif est que la cage à capsule comporte sur sa partie extérieure une bague et un ressort permettant en fin d'extraction de capsule d'assurer un bon dégagement de ladite capsule du corps cylindrique. La présence de cette bague et de ce ressort renchérissent le dispositif d'une part parce qu'ils impliquent la présence de deux pièces supplémentaires et d'autre part parce ces pièces doivent être mises en place, ce qui nécessite une manutention de montage. De plus, ils peuvent s'encrasser en cours d'utilisation et dans le pire des cas ne plus éjecter la capsule.

Le but de la présente invention est de pouvoir disposer d'un système permettant également de permettre un bon dégagement (ou éjection) de la capsule en fin d'extraction, mais avec un dispositif plus simple et donc moins onéreux et plus fiable.

La présente invention concerne un dispositif pour la confection de boisson par extraction d'une capsule comprenant une coupelle et une bordure disposée dans un ensemble porte-capsule pour machine à café, ledit dispositif comprenant
- une cage à capsule sensiblement cylindrique ayant une forme intérieure épousant sensiblement la forme extérieure de la coupelle de la capsule à extraire et comportant à sa partie supérieure suivant l'axe de ladite cage un organe d'injection d'eau dans la capsule et un moyen de liaison avec la sortie d'eau de ladite machine et à sa partie inférieure une arête annulaire
- ainsi qu'un ensemble porte-capsule formant un logement cylindrique et comportant une plaque d'extraction de capsule disposée dans le fond dudit logement, ensemble prévu pour être maintenu sous la cage à capsule de manière à ce que l'arête annulaire de la cage à capsule coopère lors de l'extraction avec le pourtour de la plaque d'extraction, et la partie intérieure de l'ensemble porte-capsule comporte latéralement et à proximité de la plaque d'extraction au moins un moyen de retenue de la bordure de la capsule.

Il est donc possible selon la présente invention de disposer d'une cage à capsule pour le logement de la capsule à extraire ne comportant pas de bague et de ressort.

On opère de la manière suivante : la capsule à extraire est disposée dans le porte-capsule. A ce stade, la bordure de la capsule appuie par son propre poids contre le moyen de retenue. Toutefois, le poids seul est insuffisant pour que la bordure de la capsule passe le moyen de retenue. On introduit alors le porte-capsule dans la cage à capsule. Pendant ce mouvement ou au plus tard lors du verrouillage du porte-capsule avec le corps cylindrique, la bordure de la capsule est forcée de passer le moyen de retenue. Ceci se fait de deux manières possibles : soit sans déformation plastique de la capsule, mais avec une déformation élastique du moyen de retenue, soit avec déformation plastique de la capsule et sans déformation élastique du moyen de retenue. On actionne alors la machine à café pour extraire la capsule et obtenir la boisson souhaitée. Après l'extraction, on déverrouille le porte-capsule. A ce stade, la capsule est coincée dans la cage à capsule et le moyen de retenue, qui est solidaire du porte-capsule, appuie sur la bordure de la capsule sans céder. Lorsqu'on retire le porte-capsule manuellement, on entraîne et de ce fait, on éjecte la capsule de la cage à capsule. Il suffit alors de renverser le porte-capsule pour faire tomber la capsule utilisée : dû au fait que le moyen de retenue est disposé seulement d'un côté, la capsule peut basculer par le côté opposé et se dégager dudit moyen de retenue. Le moyen de retenue permet donc de bien dégager la capsule de la cage a capsule, mais comme ce moyen de retenue s'étend sur une partie seulement du pourtour de la plaque d'extraction, il est possible de la faire ensuite tomber aisément dans un récipient pour les déchets.

Comme mentionné ci-dessus pour la description du mode opératoire, il peut être avantageux que le moyen de retenue ait une certaine élasticité: il est par conséquent préférable que ce moyen de retenue soit par exemple en matière plastique ou en caoutchouc ou toute autre matière élastique.

Le moyen de retenue est disposé dans le bas du logement du porte-capsule, au niveau de la plaque d'extraction, sur la partie verticale dudit logement. Dans une forme de réalisation préférée, il y a deux moyens de retenue se présentant sous la forme de patte formant un arc de cercle, chaque patte ayant une largeur telle qu'elle forme un arc de cercle d'angle de moins de 30 °, de préférence de moins de 10 °. Dans une autre forme de réalisation, le moyen de retenue se présente sous la forme d'un rebord en forme d'arc de cercle excentré ayant une dimension telle que ledit arc de cercle a un angle de moins de 180 °, de préférence de moins de 90 °.

La plaque d'extraction de capsule se présente sous la forme d'une plaque avec éléments en relief et en creux avec des orifices d'écoulement du café. Les éléments en relief sont par exemple des pyramides ou des troncs de pyramide : dans cette forme de réalisation la capsule à extraire présente une coupelle et une bordure avec un opercule sans aucune ligne d'affaiblissement. Lors de l'extraction c'est la montée en pression dans la capsule qui fait se plaquer l'opercule contre les éléments en relief et qui provoque la déchirure dudit opercule contre lesdits éléments en relief.

La plaque d'extraction peut également se présenter sous la forme d'une plaque avec seulement des orifices d'écoulement. Dans ce cas, la capsule à extraire présente toujours une coupelle, une bordure et un opercule, mais l'opercule présente des zones d'affaiblissement pour permettre l'extraction sous pression.

L'ensemble porte-capsule peut se présenter sous la forme d'une seule pièce ou de deux pièces. Dans le premier cas, le porte-capsule comporte la plaque d'extraction de capsule et le moyen de retenue de la bordure de l'opercule fait partie intégrante du porte-capsule même. Dans le second cas, l'ensemble porte-capsule comprend le porte-capsule en tant que tel, un support de plaque disposé dans ledit porte-capsule et la plaque d'extraction de capsule. Le support de plaque est normalement de forme conique vers le bas et de forme cylindrique vers le haut, le moyen de retenue de la bordure de la capsule étant dans ladite partie cylindrique. La description des figures donnera une représentation concrète de ce type d'arrangement.

Le moyen de liaison du corps cylindrique avec la sortie d'eau de la machine est un système à baïonnette, ce qui facilite beaucoup le montage et le démontage dudit corps cylindrique.

Comme déjà mentionné ci-dessus, il faut que le moyen de retenue soit en une matière élastique : la solution la plus simple est donc de prévoir tout l'ensemble porte-capsule en matière plastique, éventuellement aussi le corps cylindrique. Ceci a pour conséquence en outre, que par rapport à un porte-capsule en métal, on arrive à vraiment réduire le coût de la machine. On envisage par exemple comme matière plastique du polyamide.

La suite de la description est faite en référence avec les figures sur lesquelles :
Fig. 1 est une coupe simplifiée du dispositif selon l'invention dans une première forme de réalisation,
Fig. 2 est la même coupe, mais au moment de l'extraction ,
Fig. 3 toujours la même coupe au moment du dégagement (éjection) de la capsule extraite,
Fig. 4 est une coupe simplifiée du dispositif selon l'invention dans une seconde forme de réalisation,
Fig. 5 est une coupe du support de plaque,
Fig. 6 est une vue de dessus du support de la figure 5 avec la plaque d'extraction et
Fig. 7 est une représentation schématique selon un troisième mode de réalisation.

Le dispositif selon l'invention comprend une cage à capsule (1) comprenant un moyen de liaison (2) avec la sortie d'eau (non représentée) de la machine à café : ce moyen de liaison est à baïonnette (3) et il est donc facilement rendu solidaire de la machine à café en tant que telle. Cette cage à capsule comprend en outre sur la périphérie des rampes de serrage (4) et une partie creuse (5) ayant une forme épousant sensiblement la forme extérieure de la capsule à extraire :la partie creuse sensiblement cylindrique ou tronconique (5) comprend à sa partie inférieure une arête annulaire (8). La partie creuse comprend finalement un organe d'injection d'eau (6) percé d'orifices (7) orientés vers le haut.

La capsule à extraire comprend une coupelle (9), un opercule (10) et une bordure (12) et elle contient du café rôti et moulu (11).

Cette capsule est disposé dans un ensemble porte-capsule (13) avec logement à capsule (14) de forme sensiblement cylindrique, la capsule étant dans ledit logement à capsule.L'ensemble porte-capsule comporte une plaque d'extraction (15) de la capsule (9) comprenant des éléments en relief (17) et en creux et des trous (18) pour le passage du café. L'ensemble porte-capsule comprend également un orifice (16) permettant l'évacuation du café dans la tasse lors de l'extraction de la capsule (9) et des pattes de serrage (20) prévues pour s'engager dans les rampes de serrage (4) de la cage à capsule. Dans ce mode de réalisation l'ensemble porte-capsule est en une seule pièce. Comme déjà mentionné ci-dessus, le but de l'invention est de prévoir à l'intérieur de l'ensemble porte-capsule un moyen de retenue (19) de la bordure (12) de la capsule. Ce moyen déborde légèrement vers le centre par rapport à la paroi cylindrique formée par le logement (14). D'autre part, il doit également s'étendre sur un certain arc de cercle :l'arc de cercle ainsi défini doit réaliser un compromis de manière à bien assurer le maintien de la bordure de la capsule, et d'autre part, garantir qu'en fin d'extraction ladite bordure pourra se dégager sans trop de peine et permettre ainsi une bonne éjection. De manière préférentielle, on choisit un arc de cercle ayant un angle compris entre 5 et 40 °. Il est bien entendu que le débordement vers le centre ne doit pas dépasser la largeur de la bordure de la capsule.

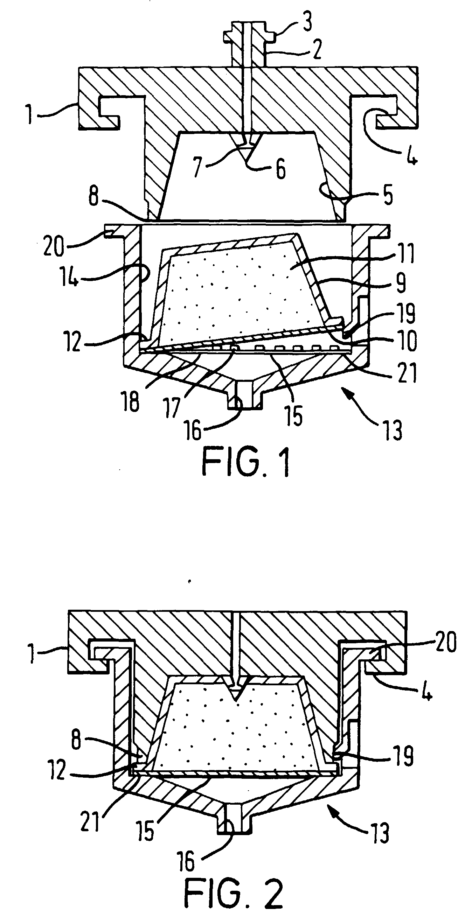

On opère alors de la manière suivante : la capsule (9) est disposée dans l'ensemble porte-capsule (13). La bordure (12) de ladite capsule appuie contre le moyen de retenue (19). On introduit alors l'ensemble porte-capsule par ses pattes de serrage (20) sur la rampe de serrage (4) de la cage à capsule (1). La bordure (12) de la capsule est alors forcée de passer le moyen de retenue (19) : cette position est représentée sur la figure 2. Ceci peut se faire grâce à l'élasticité du moyen de retenue (19).La machine est maintenant prête pour faire l'extraction de la capsule.L'étanchéité est assurée par le pincement de la bordure (12) de la capsule entre l'arête annulaire (8) de la cage à capsule et le pourtour (21) de la plaque d'extraction (15).

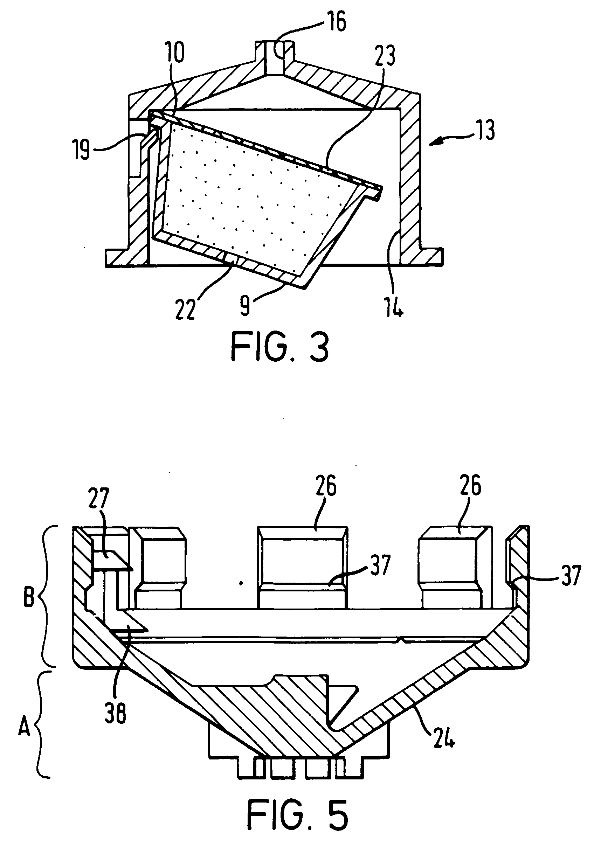

La figure 3 montre seulement l'ensemble porte-capsule (13) au moment du dégagement (éjection) de la capsule (9) extraite. On enlève l'ensemble porte-capsule de la cage à capsule et on le retourne. Comme le moyen de retenue (19) s'étend seulement sur une partie limitée de la circonférence du logement (14), la capsule peut par la gravitation tomber hors dudit logement (14). La capsule comporte une ouverture (22) faite par l'organe d'injection d'eau (6) et l'opercule (10) est déchiré selon (23) sur les éléments en relief (17).

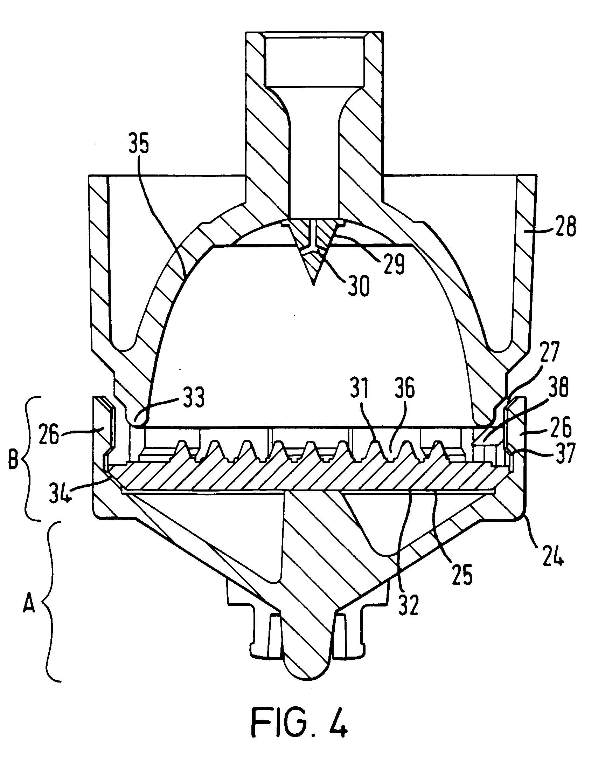

La figure 4 montre une seconde forme de réalisation du dispositif selon l'invention, dans lequel l'ensemble porte-capsule est en deux parties, la figure ne montrant que le support de plaque (24) et la plaque d'extraction (25) de capsule et ne montrant pas de présence de capsule à extraire. La cage à capsule (28) comprend le logement (35) pour la capsule à extraire ainsi que l'organe d'injection d'eau (29) avec les orifices (30) et l'arête annulaire (33). La plaque d'extraction (25) comprend les éléments en relief (31) et les creux (36). C'est dans les creux que se trouvent les orifices (32) permettant le passage du café. L'arête annulaire (33) du corps cylindrique coopère avec le pourtour (34) de la plaque d'extraction (25) pour garantir l'étanchéité lors de l'extraction de la capsule.

Le support de plaque (24) comprend une partie conique inférieure A et une partie cylindrique supérieure B. La partie B est faite pour se loger dans le porte-capsule en tant que tel. La partie B comprend des pattes de maintien (26) et (27) uniformément réparties sur la couronne dudit support de plaque (24). Les pattes (26) comportent une butée (37) permettant le maintien de la plaque d'extraction (25) dans le logement de l'ensemble porte-capsule. Les pattes (27) comportent le moyen de retenue (38) de la bordure de capsule. On peut avoir soit un , soit deux de ces moyens de retenue. Sur la figure, le moyen de retenue forme un arc de cercle d'angle x. Dans le cas présent, cet angle est de 20°.

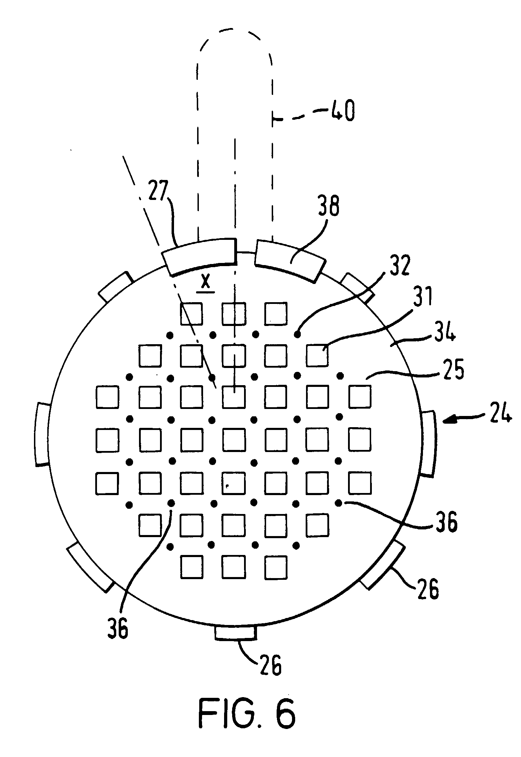

La figure 6 est une vue schématique de dessus, dans laquelle on voit bien le support de plaque (24) et la plaque d'extraction (25). Cette plaque (25) comprend un pourtour (34) garantissant l'étanchéité lors de l'extraction. On voit bien sur cette figure les 7 pattes de maintien (26) et les deux pattes de maintien (27) comportant les deux moyens de retenue (38). On a indiqué en pointillés la poignée (40) de l'ensemble porte-capsule. Normalement les moyens de retenue (38) sont disposés face à la poignée (40), de manière à garantir un bon dégagement des capsules aussi bien pour les droitiers que pour les gauchers.

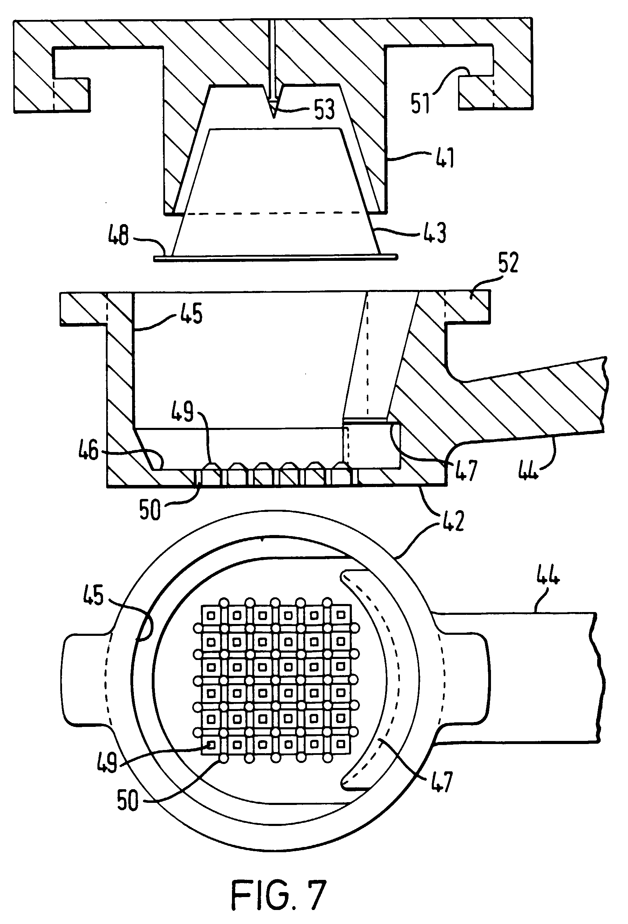

La figure 7 montre finalement un troisième mode de réalisation du dispositif selon l'invention. On voit ici l'ensemble du dispositif composé de la cage à capsule (41) comprenant un organe d'injection d'eau (53) et des rampes de serrage (51), du porte-cartouche (42) et de la cartouche (43) à extraire. Le porte-cartouche (42) comprend la poignée, le logement (45), la plaque d'extraction (46) ainsi que les pattes de serrage (52) prévues pour s'engager sur la rampe de serrage (51). La partie inférieure du logement (45) comprend un rebord (47) constituant le moyen de retenue de la bordure (48) de la cartouche (43). La plaque d'extraction (46) comprend des éléments en relief (49) et des orifices (50) permettant l'ouverture de la capsule et le passage du café lors de l'extraction de la capsule (43).
On voit que le rebord (47) s'étend de part et d'autre de la poignée (44). Ce rebord ne doit pas s'étendre sur un arc de cercle de plus de 180°, de préférence il s'étend sur un arc de cercle d'angle d'environ 90°.
L'avantage de cette version est la simplicité. Le porte-capsule (42) est réalisable par injection en une seule pièce. Le matériau injecté est soit un métal, par exemple aluminium, soit un plastique dur et rigide.

## Revendications

1. Dispositif pour la confection de boisson par extraction d'une capsule comprenant une coupelle (9) et une bordure (12) disposée dans un ensemble porte-capsule (13) pour machine à café, ledit dispositif comprenant
- une cage à capsule (1) sensiblement cylindrique ayant une forme intérieure épousant sensiblement la forme extérieure de la coupelle de la capsule à extraire et comportant à sa partie supérieure suivant l'axe dudit cylindre un organe d'injection d'eau (6) dans la capsule et un moyen de liaison avec la sortie d'eau (16) de ladite machine et à sa partie inférieure une arête annulaire (8) ainsi
- qu'un ensemble porte-capsule (13) formant un logement cylindrique et comportant une plaque d'extraction (15) de capsule disposée dans le fond dudit logement, ensemble prévu pour être maintenu sous la cage à capsule de manière à ce que l'arête annulaire de la cage à capsule coopère lors de l'extraction avec le pourtour de la plaque d'extraction, et la partie intérieure de l'ensemble porte-capsule comporte latéralement et à proximité de la plaque d'extraction au moins un moyen (19, 27, 47) de retenue de la bordure de la capsule.

2. Dispositif selon la revendication 1, comprenant au moins deux moyens de retenue (19, 27, 47) se présentant sous la forme de patte (26) formant un arc de cercle, chaque patte (26) ayant une largeur telle qu'elle forme un arc de cercle d'angle de moins de 30 °, de préférence de moins de 10 °.

3. Dispositif selon la revendication 1, dans lequel le moyen de retenue (19, 27, 47) se présente sous la forme d'un rebord en forme d'arc de cercle ayant une dimension telle que ledit arc de cercle a un angle de moins de 180 °.

4. Dispositif selon l'une des revendications 1 à 3, dans lequel la plaque d'extraction (15) de capsule se présente sous la forme d'une plaque avec éléments (17) en relief et en creux avec des orifices (18) d'écoulement du café..

5. Dispositif selon l'une des revendications 1 à 3, dans lequel la plaque d'extraction (15) se présente sous la forme d'une plaque avec des orifices d'écoulement (18).

6. Dispositif selon l'une des revendications 1 à 5, dans lequel l'ensemble porte-capsule (13) se présente sous la forme d'une seule pièce.

7. Dispositif selon l'une des revendications 1 à 5, dans lequel l'ensemble porte-capsule (13) se présente sous la forme de deux pièces, à savoir le porte-capsule et un support de plaque logé dans ledit porte-capsule.

8. Dispositif selon l'une des revendications 1 à 7, dans lequel le moyen de liaison (2) du corps cylindrique avec la sortie d'eau de la machine est un système à baïonnette (3).

9. Dispositif selon l'une des revendications 1 à 8, dans lequel la cage à capsule (1) et l'ensemble porte-capsule (13) sont en matière plastique.

## Patentansprüche

1. Vorrichtung zur Herstellung eines Getränks durch Extraktion einer Kapsel, die einen Napf (9) und einen Flansch (12) aufweist und in einer Kapselhaltereinheit (13) für eine Kaffeemaschine angeordnet ist, wobei diese Vorrichtung folgendes umfaßt:
a) einen im wesentlichen zylindrischen Kapselkäfig (1), dessen Innenform sich im wesentlichen an die Außenform des Napfes der zu extrahierenden Kapsel anschmiegt und der in seinem oberen Bereich in der Achse des Zylinders ein Organ (6) zum Einspritzen von Wasser in die Kapsel und eine Einrichtung zur Verbindung mit dem Wasseraustritt (16) der Maschine und in seinem unteren Bereich eine ringförmige Kante (8) aufweist, sowie
b) eine Kapselhaltereinheit (13), die eine zylindrische Aufnahme bildet und eine im Boden dieser Aufnahme angeordnete Platte (15) zur Extraktion der Kapsel aufweist und vorgesehen ist, um unter dem Kapselkäfig so gehalten zu werden, daß die ringförmige Kante des Kapselkäfigs bei der Extraktion mit dem Umfang der Extraktionsplatte zusammenwirkt, wobei der untere Bereich der Kapselhaltereinheit seitlich in Nähe der Extraktionsplatte mindestens eine Einrichtung (19, 27, 47) zum Zurückhalten des Flansches der Kapsel aufweist.

2. Vorrichtung nach Anspruch 1, die mindestens zwei Rückhalteeinrichtungen (19, 27 ,47) in Form von kreisbogenförmigen Lappen (26) aufweist, deren jeder eine solche Breite besitzt, daß er einen Kreisbogen mit einem Winkel von weniger als 30° und vorzugsweise weniger als 10° bildet.

3. Vorrichtung nach Anspruch 1, bei der die Rückhaltevorrichtung (19, 27, 47) die Form einer Leiste in Form eines Kreisbogens besitzt, die eine solche Abmessung hat, daß der Kreisbogen einen Winkel von weniger als 180° hat.

4. Vorrichtung nach einem der Ansprüche 1 bis 3, bei der die Platte (15) zur Extraktion der Kapsel in Form einer Platte mit erhabenen und vertieften Elementen (17) mit Öffnungen (18) zum Abfließen des Kaffees vorliegt.

5. Vorrichtung nach einem der Ansprüche 1 bis 3, bei der die Extraktionsplatte (15) in Form einer Platte mit Ablauföffnungen (18) vorliegt.

6. Vorrichtung nach einem der Ansprüche 1 bis 5, bei der die Kapselhaltereinheit (13) in einstückiger Form vorliegt.

7. Vorrichtung nach einem der Ansprüche 1 bis 5, bei der die Kapselhaltereinheit (13) in Form von zwei Teilen vorliegt, und zwar dem Kapselhalter und einem in dem Kapselhalter untergebrachten Plattenhalter.

8. Vorrichtung nach einem der Ansprüche 1 bis 7, bei der die Einrichtung (2) zur Verbindung des zylindrischen Körpers mit dem Wasseraustritt der Maschine ein Bajonettsystem (3) ist.

9. Vorrichtung nach einem der Ansprüche 1 bis 8, bei der der Kapselkäfig (1) und die Kapselhaltereinheit (13) aus Kunststoff bestehen.

## Claims

1. Device for production of a beverage by extraction of a capsule comprising a cup (9) and an edge (12), which is disposed in a capsule-holder assembly (13) for a coffee machine, the said device comprising
- a capsule cage (1), which is substantially cylindrical, with an inner shape which matches substantially the outer shape of the cup of the capsule to be extracted, and comprises on its upper part, according to the axis of the said cylinder, a unit (6) for injection of water into the capsule, and means for connection with the water output (16) of the said machine, and comprises on its lower part an annular ridge (8), as well as
- a capsule-holder assembly (13), which forms a cylindrical housing, and comprises a capsule-extraction plate (15) which is disposed on the base of the said housing, which assembly is designed to be maintained beneath the capsule cage, such that the annular ridge of the capsule cage co-operates during extraction with the periphery of the extraction plate, and the lower part of the capsule-holder assembly comprises laterally, and in the vicinity of the extraction plate, at least one means (19, 27, 47) for retention of the edge of the capsule.

2. Device according to claim 1, comprising at least two retention means (19, 27, 47) which are in the form of a lug (26) which forms an arc of a circle, each lug (26) having a width such that it forms an arc of a circle with an angle of less than 30°, and preferably less than 10°.

3. Device according to claim 1, wherein the retention means (19, 27, 47) are in the form of an edge in the form of an arc of a circle, which has a dimension such that the said arc of a circle has an angle of less than 180°.

4. Device according to any one of claims 1 to 3, wherein the capsule-extraction plate (15) is in the form of a plate which has projecting and recessed elements (17), with apertures (18) for outflow of the coffee.

5. Device according to any one of claims 1 to 3, wherein the extraction plate (15) is in the form of a plate with outflow apertures (18).

6. Device according to any one of claims 1 to 5, wherein the capsule-holder assembly (13) is in the form of a single part.

7. Device according to any one of claims 1 to 5, wherein the capsule-holder assembly (13) is in the form of two parts, i.e. the capsule holder and a plate support, which is accommodated in the said capsule holder.

8. Device according to any one of claims 1 to 7, wherein the means (2) for connection of the cylindrical body to the water outlet of the machine is a bayonet system (3).

9. Device according to any one of claims 1 to 8, wherein the capsule cage (1) and the capsule-holder assembly (13) are made of plastics material.
